# EUROPÄISCHE PATENTSCHRIFT

(11) **EP 1 300 062 B1**
(45) Veröffentlichungstag und Bekanntmachung des Hinweises auf die Patenterteilung: **28.11.2007**
(21) Anmeldenummer: 02020848.4
(22) Anmeldetag: 18.09.2002
(51) Int. Cl.: A01D 17/10, B65G 17/02

(54) **Transportband**
Conveyor belt
Bande transporteuse

(30) Priorität: 06.10.2001 DE 20116382 U
(43) Veröffentlichungstag der Anmeldung: 09.04.2003
(73) Patentinhaber: Grimme Landmaschinenfabrik GmbH & Co. KG, 49401 Damme (DE)
(72) Erfinder: Brintrup, Hermann-Josef, 49401 Damme (DE)
(74) Vertreter: Busse & Busse Patentanwälte

(56) Entgegenhaltungen:
- EP-A- 0 413 399
- NL-A- 8 602 293
- US-A- 4 416 368
- US-A- 4 653 632
- US-A- 5 213 219
- US-A- 6 158 577
- PATENT ABSTRACTS OF JAPAN vol. 007, no. 124 (M-218), 28. Mai 1983 (1983-05-28) -& JP 58 042509 A (NAKURA SEISAKUSHO:KK), 12. März 1983 (1983-03-12)

## Beschreibung

Die Erfindung betrifft ein Transportband in einer Ausbildung gemäß dem Oberbegriff des Anspruchs 1.

Bekannte Transportbänder dieser Art finden beispielsweise als Siebkettenförderer in Kartoffelerntemaschinen Verwendung.

Ein Beispiel für einen gattungsmäßigen Stabkettenförderer findet sich in der Entgegenhaltung EP 0 413 399 A1. Dort ist ein endlos umlaufendes Transportband insbesondere für landwirtschaftliche Güter offenbart, das aus einem bandförmigen Flächenträger gebildet ist, der von beabstandet zueinander angeordneten Querstäben gehalten ist, die ihrerseits mit ihren überstehenden Enden auf seitlich angeordneten und umlaufend angetriebenen Tragmitteln aufliegen. Im Zwischenraum zwischen den Querträgern hängt der Flächenträger leicht bauchig nach unten durch. Im Zwischenraum zwischen benachbarten Querträgern ergeben sich Fördertaschen, in denen Erntegut prinzipiell gut in Förderrichtung abgefördert werden kann. Ein Nachteil des vorbekannten Transportbandes ist darin zu sehen, dass die Fördertaschen nicht seitlich so begrenzt sind, dass Erntegutverluste ausgeschlossen sind. Auch in der Schrift US 6,158,577 ist ein Transportband gezeigt, bei dem das Erntegut durch quergerichtete Mitnehmerleisten auf dem Flächenträger zwar gut gegen ein Zurückrollen des Fördergutes bei schräg ansteigender Förderrichtung gesichert sind, nicht jedoch gegen seitliche Gutverluste, die leicht bei einem Betrieb des Transportbandes am Hang oder bei größeren Fördermengen in den einzelnen Fördertaschen auftreten können.

Die Erfindung befaßt sich mit dem Problem, ein Transportband der genannten Art als Förderer mit geringeren seitlichen Gutverlusten auszugestalten, und löst dieses Problem durch ein Transportband mit den Merkmalen des Anspruchs 1. Hinsichtlich weiterer Ausgestaltungen wird auf die Ansprüche 2 bis 12 verwiesen.

Das Transportband nach der Erfindung hat eine zumindest auch seitlich begrenzte Förderfläche, so daß mit ihm Transportaufgaben wie beispielsweise der Transport von Kartoffeln o. dgl. Erntegütern ohne seitliche Gutverluste vorgenommen werden können. Grundsätzlich ist das Transportband wie jedes Förderband zum Transport von Gegenständen aller Art geeignet. Durch die seitlich vom Flächenträger angebrachten Seitenbegrenzungsteile ist das Transportband in der Lage, auch auf schrägen Flächen oder bei einer hohen Befüllung der Fördertaschen mit Fördergut das Fördergut ohne seitliche Verluste zu befördern. Dadurch wird die Förderleistung und die Zuverlässigkeit des Transportbandes erhöht.

Das Transportband erfindungsgemäßer Ausbildung ist überaus einfach, leicht und preisgünstig herstellbar und dabei von besonders geringem Gewicht. Die leichte Anbringbarkeit und die leichte Auswechselbarkeit des Flächenträgers macht das Transportband besonders reparaturfreundlich. Die Mitnehmerleisten erfüllen eine Stoßdämpfungswirkung auf herabfallendes Gut, das insbesondere bei empfindlichem Fördergut wie Kartoffeln dazu beiträgt, Beschädigungen des Fördergutes zu vermindern.

Weitere Einzelheiten und Wirkungen ergeben sich aus der nachfolgenden Beschreibung und der Zeichnung, in der mehrere Ausführungsbeispiele des Gegenstands der Erfindung näher veranschaulicht sind. Im einzelnen zeigen:

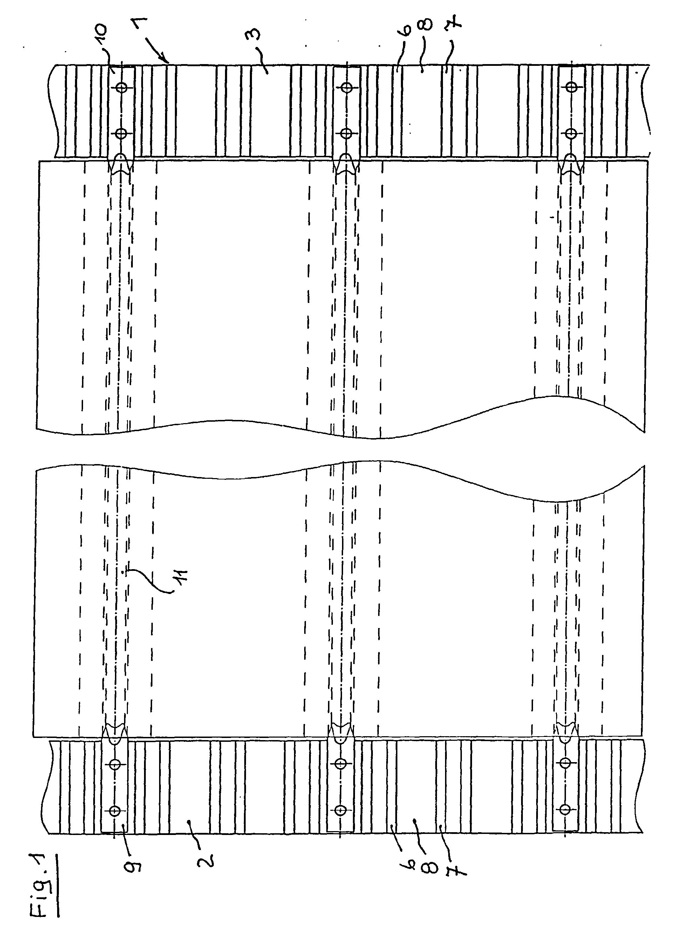

- Fig. 1: eine in Längs- und in Querrichtung abgebrochene Draufsicht auf ein Transportband nach der Erfindung,
- Fig. 2: einen abgebrochenen Längsschnitt durch einen Abschnitt des Transportbandes in einer ersten Ausführung,
- Fig. 3: eine Schnittdarstellung ähnlich Figur 2 einer zweiten Transportbandausführung,
- Fig. 4: eine Querschnittsdarstellung ähnlich Figur 2 zur Veranschaulichung einer weiteren Abwandlung,
- Fig. 5: eine abgebrochene Seitenansicht eines mit Seitenbegrenzungsteilen versehenen Transportbandes, teilweise im Schnitt nach der Linie V-V in Fig. 6,
- Fig. 6: eine abgebrochene Schnittdarstellung zu Fig. 5 nach der Linie VI-VI in Fig. 5,
- Fig. 7 und 8: Darstellungen ähnlich Fig. 5 und 6 einer abgewandelten Ausführung,
- Fig. 9: eine Darstellung ähnlich Fig. 2 einer weiteren Ausführungsform, und
- Fig. 10: eine abgebrochene Draufsicht zu Fig. 9.

Das als Ganzes mit 1 bezeichnete Transportband besteht aus zwei Tragmitteln in Gestalt von Trägeriemen 2, 3, die im Abstand parallel zueinander endlos angetrieben umlaufen können und dabei üblicherweise durch Antriebs- und Umlenkrollen geführt sind. Anstelle von bevorzugten Trägeriemen können auch Trägerketten zum Einsatz gelangen, z. B. Laschenketten.

Die dargestellten Trägerriemen 2, 3 sind an ihrer Unterseite mit annähernd trapezförmigen Vorsprüngen 4 und zwischenliegenden Ausnehmungen 5 versehen, die beispielsweise mit entsprechend gestalteten Antriebsrollen einen sicheren Bandantrieb gewährleisten. Die Trägerriemen 2, 3 können wie dargestellt auch an ihrer Oberseite mit einer Profilierung versehen sein, die beispielsweise von Stegen 6, 7 begrenzte Ausnehmungen 8 bilden, die zur versenkten Aufnahme flachgedrückter Enden 9, 10 von Querstäben 11 dienen, die mit den Trägerriemen 2, 3 verbunden, z. B. vernietet sind und in gleichmäßigen gegenseitigen Abständen über die Länge des Transportbandes 1 verteilt sind. Bei einem bevorzugtem Anwendungsbeispiel beträgt der Abstand zwischen den Mittelachsen der Querstäbe 120 mm, wobei die Querstäbe 11 einen Durchmesser von 10 mm aufweisen. Breite und Länge des Transportbandes 1, die Abmessungen der Trägerriemen 2, 3, der Durchmesser der Querstäbe 11 und deren Abstände sind grundsätzlich frei wählbar und bestimmen sich ausschließlich nach dem vorgesehenen Einsatzzweck. Anstelle von Vollstäben können auch querstabartige Hohlprofile beliebiger, geeigneter Querschnittsform Verwendung finden.

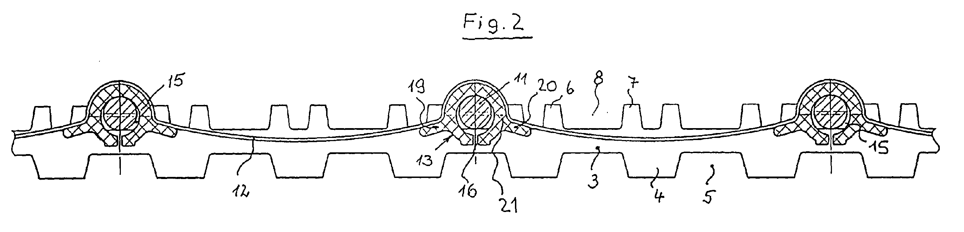

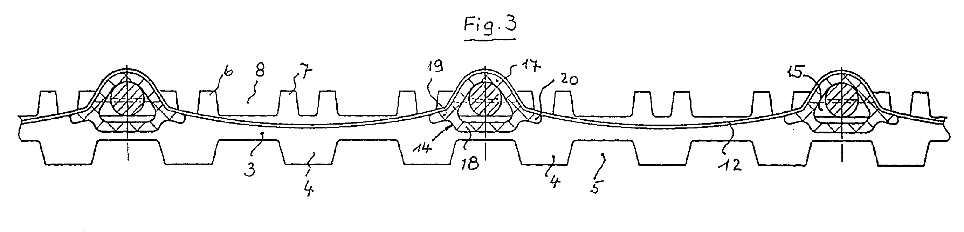

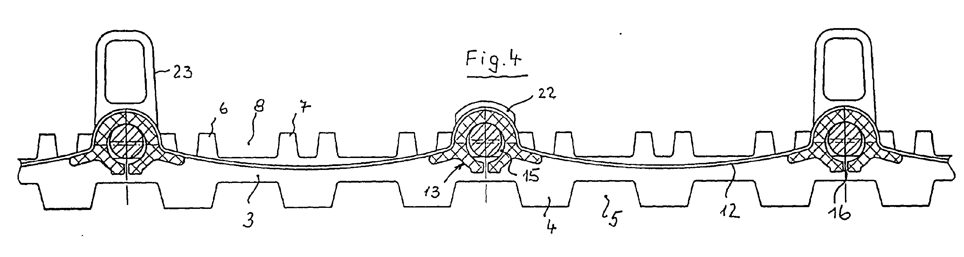

Wie den Figuren 2 bis 4 entnommen werden kann, ist zwischen den Tragmitteln 2, 3 ein endlos mitumlaufender, in der Breite im wesentlichen dem Abstand zwischen den Tragmitteln 2, 3 entsprechender bandförmiger Flächenträger 12 vorgesehen, der unterseitig mit den Querstäben 11 jeweils zugeordneten, quergerichteten Mitnehmerleisten 13 (Figur 2 und 4) und 14 (Figur 3) versehen ist. Diese Mitnehmerleisten, die vorzugsweise aus Kunststoff, besonders vorteilhaft aus Polyuretan bestehen, haben einen über ihre Länge durchgehenden Aufnahmekanal 15, der in Betriebsstellung jeweils einen Querstab 11 aufnimmt.

An ihrer Oberseite sind die Mitnehmerleisten 13, 14 zumindest bereichsweise, vorzugsweise aber durchgehend flächenbündig mit der Unterseite des Flächenträgers 12 verbunden, der von einem bandförmigen, gewebten oder gewirkten Tuch oder auch von einem bandförmigen, mehr oder weniger engmaschigen Netz gebildet sein kann. Dabei ist eine Beschichtung des Tuches oder Netzes mit Kunststoff oder Gummi möglich. Bei einem gänzlich aus Kunststoff oder Gummi bestehendem Flächenträger 12 kann dieser als Folie bzw. Bahn ausgebildet sein, die eine geschlossene oder auch durch Lochung unterbrochene Fläche darbieten.

In bevorzugter Ausführung sind die Mitnehmerleisten 13, 14 an die Unterseite des Flächenträgers 12 angegossen, und zwar unmittelbar bei ihrer Formgebung. Eine derartige Ausgestaltung schafft ein hohes Maß an Verbindungsfestigkeit bei gleichzeitig schneller und einfacher Herstellungsmöglichkeit. Statt dessen ist es aber auch möglich, die Mitnehmerleisten 13, 14 z. B. durch Extrudieren vorzugfertigen und nach entsprechender Ablängung an die Unterseite des Flächenträgers 12 anzukleben oder anzuschweißen. Auch hierdurch entsteht ein fester Flächenverbund, der hohe Kräfte aufzunehmen geeignet ist.

Bei dem Ausführungsbeispiel nach Figur 2 und 4 weisen die Mitnehmerleisten 13 ein Querschnittsprofil auf, das unterseitig einen längslaufenden Durchlaßschlitz 16 für ein achsparalleles Aufklipsen auf einen Querstab 11 darbietet. Eine solche Ausführung ist bevorzugt, weil sie ein schnelles und einfaches Anbringen des Flächenträgers 12 mit seinen Mitnehmerleisten 13, 14 auf den Querstäben 11 des Transportbandes 1 ermöglicht. Auch das Abnehmen, z. B. zum Zwecke des Auswechselns gegen einen neuen Flächenträger 12, ist einfach und bedarf keines Ausbaues des Transportbandes 1 aus der Maschine oder aus dem Aggregat, in der es abgestützt ist. Statt dessen können die Mitnehmerleisten 14 gemäß Figur 3 auch ein geschlossenes Querschnittsprofil mit einem dementsprechend lediglich an seinen Enden offenen Aufnahmekanal 15 aufweisen.

Bei der Ausführung nach Figur 2 und 4 weist das Querschnittsprofil der Mitnehmerleisten 13 eine kreisförmige Grundform auf, wobei der Durchmesser des Aufnahmekanals 15 größer ist als der Durchmesser eines einzuführenden Querstabes 11. Bei der Ausführung nach Figur 3 hat das Querschnittsprofil der Mitnehmerleisten 14 einen gerundeten Oberteil 17 und einen Unterteil 18 mit flachem Boden, wobei ein in die inneren Konturlinien einbeschreibbarer Kreisbogen einen Durchmesser aufweist, der größer ist als der eines einzusetzenden Querstabes 11. Insgesamt hat der Aufnahmeraum 15 der Mitnehmerleisten 14 die Grundform eines in den Ecken abgerundeten Dreiecks.

Auf beiden Seiten haben die Mitnehmerleisten 13, 14 einen in bzw. entgegen Förderrichtung des Transportbandes 1 weisenden Ansatzsteg 19, 20, der ebenfalls flächenbündig mit der Unterseite des Flächenträgers 12 verbunden ist und dementsprechend zur Vergrößerung der Verbindungsfläche zwischen Mitnehmerleiste 13, 14 und Flächenträger 12 beiträgt. Die Ansatzstege 19, 20 sind geringfügig unterhalb einer horizontalen Mittelebene 21 durch die Mitnehmerleiste 13, 14 angesetzt und haben eine leichte Abwärtsneigung, die an den leicht muldenförmigen Verlauf des Flächenträgers 12 zwischen zwei Mitnehmerleisten 13, 14 angepaßt ist.

Wie der Figur entnommen werden kann, kann auf der Oberseite des Flächenträgers 12 oberhalb der Mitnehmerleisten 13, 14 eine Verschleißschutzleiste 22 aufgebracht sein. Statt dessen oder zusätzlich können auf der Oberseite des Flächenträgers 12 oberhalb der Mitnehmerleisten 13, 14 auch Mitnehmerkörper 23 aufgebracht sein, die sich über die gesamte Breite des Flächenträgers 12 oder einen Teil der Breite erstrecken. Die Mitnehmerkörper 23 sind vorzugsweise Hohlkörper und bevorzugt ebenso wie die Verschleißschutzleisten 22 aus Kunststoff, insbesondere Polyurethan, gefertigt. Vorteilhaft sind sie an die Oberseite des Flächenträgers 12 angegossen.

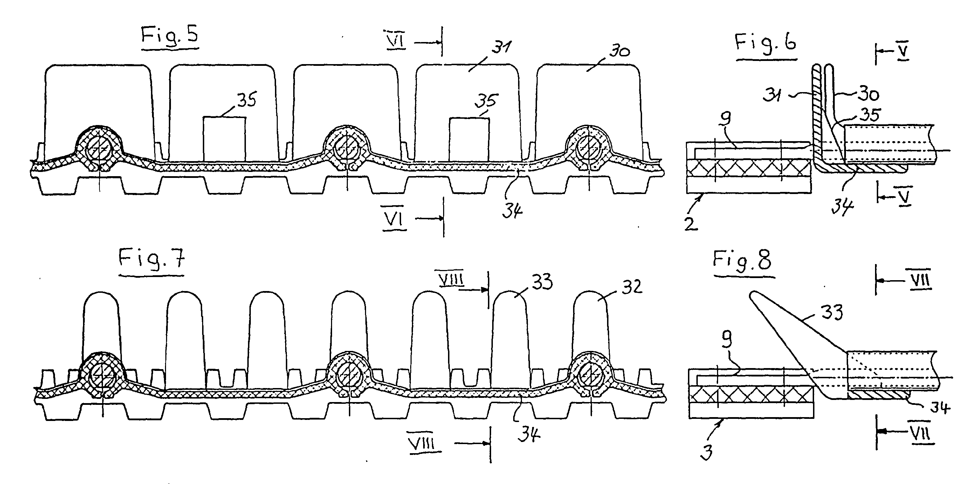

Wie die Fig. 5 bis 8 erkennen lassen, können an einem Längsrand des Flächenträgers oder an beiden Längsrändern 12 Seitenbegrenzungsteile 30,31,32,33 vorgesehen, vorzugsweise angegossen sein, die den Förderbereich des Transportbandes 1 seitlich begrenzen. Die Seitenbegrenzungsteile 30,31 sind dabei plattenförmig und die Teile 32,33 fingerförmig ausgebildet, können jedoch jede geeignete Form erhalten, die das zu fördernde Gut erfordert.

Zur Stabilisierung ihrer Lage sind die Seitenbegrenzungsteile 30,31,32,33 mit einem längslaufenden Randstreifen 34 aus Kunststoff, insbesondere Polyurethan, am Flächenträger 12 integral ausgeführt, der unter- und/oder oberseitig an den Flächenträger 12 angegossen ist. Bei den plattenförmigen Seitenbegrenzungsteilen 31, die jeweils zwischen Mitnehmerleisten 13,14 mit dem Flächenträger 12 verbunden sind, dienen Verrippungen 35 zur weiteren Lagestabilisierung.

Die plattenförmigen Seitenbegrenzungsteile 30,31 sind bei dem dargestellten Beispiel annähernd senkrecht zur Ebene des Flächenträgers 12 ausgerichtet und belassen dabei die Oberseite der Trägerriemen frei zugänglich. Bei der Ausführung nach Fig. 7 und 8 hingegen sind die fingerförmigen Seitenbegrenzungsteile 32,33 auswärts geneigt, wodurch der Gutförderbereich vergrößert ist. Dabei können sich die Teile 32 und 33 im Belastungsfalle auf der Oberseite der Trägerriemen 2,3 abstützen.

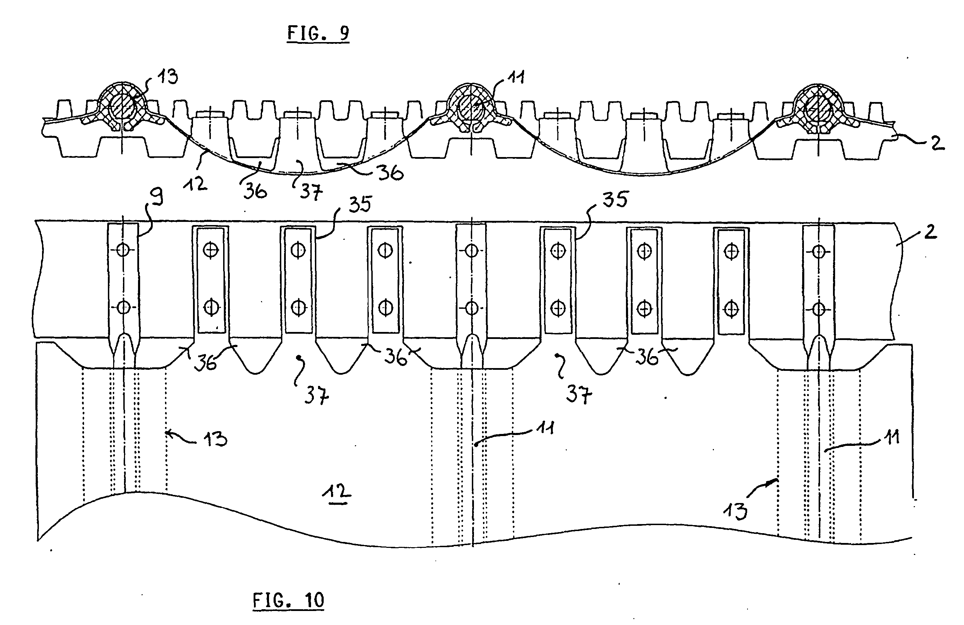

Bei der weiteren Ausführung des Transportbandes gemäß Fig. 9 und 10 ist der Flächenträger 12 an seinen den Tragmitteln 2,3 zugewandten Längsrändern mit nach außen über die Tragmittel 2,3 vorspringenden Verbindungsansätzen 35 versehen, die mit dem jeweils benachbarten Tragmittel 2 bzw. 3 verbunden, bei Ausbildung der Tragmittel 2,3 als Tragriemen mit diesen vernietet sind.

Zwischen den Verbindungsansätzen 35 ist der Flächenträger 12 mit einwärts zurückspringenden Ausschnitten 36 versehen. Die zwischen den Ausschnitten 36 befindlichen Teile 37 des Flächenträgers 12 bilden Seitenbegrenzungsbereiche des zwischen den Querstäben 11 Mulden ausbildenden Flächenträgers 12.

Eine im einzelnen nicht dargestellte weitere Ausführungsform kann Seitenteile, die den Seitenteilen 30,31,32,33 entsprechend ausgebildet sind, umfassen, die nach außen über die Tragmittel 2,3 überstehende Verbindungsansätze aufweisen und im Bereich dieser Verbindungsansätze mit dem jeweils benachbarten Tragmittel 2,3 verbunden, z.B. vernietet sind.

Derartige Ausführungsformen bieten sich insbesondere bei Flächenträgern 12 an, die tiefe Mulden zwischen den Querstäben ausbilden und/oder besonders starken Belastungen ausgesetzt sind.

## Patentansprüche

1. Transportband, bestehend aus zumindest zwei im Abstand parallel zueinander endlos angetriebenen umlaufenden Trägerriemen, -ketten o. dgl. Tragmitteln (2, 3), die untereinander durch in Abständen über die Länge der Tragmittel (2, 3) verteilt angeordnete Querstäbe (11) verbunden sind, wobei zwischen den Tragmitteln (2, 3) ein endlos mit umlaufender, in der Breite im wesentlichen dem Abstand zwischen den Tragmitteln (2, 3) entsprechender bandförmiger Flächenträger (12) vorgesehen ist, der unterseitig mit Querstäben (11) jeweils zugeordneten, quergerichteten Mitnehmerleisten (13; 14) versehen ist, die einen über ihre Länge durchgehenden Aufnahmekanal (15) für jeweils einen Querstab (11) umgrenzen, **dadurch gekennzeichnet, daß** an zumindest einen Längsrand des Flächenträgers (12) platten- oder fingerförmig ausgebildete Seitenbegrenzungsteile (30,31 ;32,33) angegossen sind und die Seitenbegrenzungsteile (30,31) annähernd rechtwinklig zur Ebene des Flächenträgers (12) die Tragmittel (2,3) oberseitig freilassend ausgerichtet sind oder die Seitenbegrenzungsteile (32,33) auswärts geneigt sind und die Tragmittel (2,3) übergreifen.

2. Transportband nach Anspruch 1, **dadurch gekennzeichnet, daß** entlang dem zumindest einen Längsrand des Flächenträgers (12) ein längslaufender Randstreifen (34) angegossen ist, der mit den Seitenbegrenzungsteilen (30,31 ;32,33) integral ausgebildet ist.

3. Transportband nach einem der Ansprüche 1 oder 2, **dadurch gekennzeichnet, daß** die Seitenteile (30,31,32,33) nach außen über die Tragmittel (2,3) überstehende Verbindungsansätze aufweisen und im Bereich der Verbindungsansätze mit dem benachbarten Tragmittel (2,3) verbunden, insbesondere vernietet sind.

4. Transportband nach einem der Ansprüche 1 bis 3, **dadurch gekennzeichnet, daß** der Flächenträger (12) an seinen den Tragmitteln (2,3) zugewandten Längsrändern nach außen über die Tragmittel (2,3) vorspringende Verbindungsansätze (35) aufweist und im Bereich dieser Ansätze mit dem benachbarten Tragmittel verbunden, insbesondere vernietet ist.

5. Transportband nach Anspruch 3, **dadurch gekennzeichnet, daß** der Flächenträger (12) zwischen den Verbindungsansätzen (35) mit einwärts zurückspringenden Ausschnitten (36) versehen ist, die zwischen sich bei Muldenbildung im Flächenträger (12) Seitenbegrenzungsbereiche darbieten.

6. Transportband nach einem der Ansprüche 1 bis 5, **dadurch gekennzeichnet, daß** die Mitnehmerleisten (13,; 14) auf beiden Seiten einen in bzw. entgegen Förderrichtung weisenden Ansatzsteg (19, 20) zur Vergrößerung der Verbindungsfläche mit der Unterseite des Flächenträgers (12) aufweisen und die Ansatzstege (19, 20) unterhalb einer horizontalen Mittelebene (21) durch die Mitnehmerleiste (13; 14) angesetzt sind und eine leichte Abwärtsneigung haben..

7. Transportband nach einem der Ansprüche 1 bis 6, **dadurch gekennzeichnet, daß** auf der Oberseite des Flächenträgers (12) oberhalb der Mitnehmerleisten (13; 14) eine Verschleißschutzleiste (22) aufgebracht ist.

8. Transportband nach einem der Ansprüche 1 bis 7, **dadurch gekennzeichnet, daß** auf der Oberseite des Flächenträgers (12) oberhalb der Mitnehmerleisten (13; 14) insbesondere ein als Hohlkörper ausgebildeter Mitnehmerkörper aufgebracht ist.

9. Transportband nach einem der Ansprüche 7 oder 8, **dadurch gekennzeichnet, daß** die Verschleißschutzleiste und/oder der Mitnehmerkörper aus Kunststoff, insbesondere Polyurethan, bestehen und an die Oberseite des Flächenträgers (12) angegossen sind.

10. Transportband nach einem der Ansprüche 1 bis 9, **dadurch gekennzeichnet, daß** der Flächenträger (12) von einem bandförmigen, gewebten oder gewirkten Tuch gebildet ist.

11. Transportband nach einem der Ansprüche 1 bis 10, **dadurch gekennzeichnet, daß** der Flächenträger (12) von einem bandförmigen Netz gebildet ist.

12. Transportband nach einem der Ansprüche 1 bis 11, **dadurch gekennzeichnet, daß** der Flächenträger (12) aus Kunststoff oder Gummi besteht oder mit Kunststoff oder Gummi überzogen ist.

## Claims

1. Conveyor belt, comprising at least two supporting belts, chains or the like supporting means (2, 3) which are driven and circulate continuously parallel to one another at a distance and which are connected together by transverse bars (11) which are arranged to be distributed at intervals along the length of the supporting means (2, 3), there being provided between the supporting means (2, 3) a planar carrier (12) in belt form which circulates continuously with the supporting means (2, 3) and whose width substantially corresponds to the distance between the supporting means (2, 3) and which is provided on the underside with transversely directed entrainment strips (13, 14) which are associated with respective transverse bars (11) and which define receiving channels (15), which are continuous over the length of the entrainment strips (13, 14), for respective ones of the transverse bars (11), **characterised in that** lateral boundary parts (30, 31; 32, 33) of a plate-like or finger-like form are integrally moulded at at least one longitudinal edge of the planar carrier (12), and the lateral boundary parts (30, 31) are directed approximately at right angles to the plane of the planar carrier (12) to leave the supporting means (2, 3) free on the upper side, or the lateral boundary parts (32, 33) are inclined outwards and extend over the supporting means (2, 3).

2. Conveyor belt according to claim 1, **characterised in that** a longitudinally extending edge strip (34), which is integrally formed with the lateral boundary parts (30, 31; 32, 33), is integrally moulded along the at least one longitudinal edge of the planar carrier (12).

3. Conveyor belt according to either of claims 1 and 2, **characterised in that** the lateral parts (30, 31, 32, 33) have connecting projections which project outwards across the supporting means (2, 3), and are connected, and in particular riveted, to the adjacent supporting means (2, 3) in the region of the connecting projections.

4. Conveyor belt according to one of claims 1 to 3, **characterised in that** the planar carrier (12) has, at its longitudinal edges adjacent the supporting means (2, 3), connecting projections (35) which project across the supporting means (2, 3), and is connected, and in particular riveted, to the adjacent supporting means in the region of these projections.

5. Conveyor belt according to claim 3, **characterised in that** the planar carrier (12) is provided, between the connecting projections (35), with inwardly recessed cutouts (36) which offer, between them, lateral boundary regions when troughs form in the planar carrier (12).

6. Conveyor belt according to one of claims 1 to 5, **characterised in that** the entrainment strips (13, 14) have, on their two sides, projecting ribs (19, 20) pointing respectively in the direction of feed and in the opposite direction to the direction of feed, to increase the area of the connection to the underside of the planar carrier (12), and the projecting ribs (19, 20) are connected on below a horizontal centre plane (21) through the entrainment strip (13, 14) and have a slight downwards inclination.

7. Conveyor belt according to one of claims 1 to 6, **characterised in that** a strip (22) to protect against wear is mounted on the upper side of the planar carrier (12), above the entrainment strips (13, 14).

8. Conveyor belt according to one of claims 1 to 7, **characterised in that** an entraining body, in particular in the form of a hollow body, is mounted on the upper side of the planar carrier (12), above the entrainment strips (13, 14).

9. Conveyor belt according to either of claims 7 and 8, **characterised in that** the strip to protect against wear and/or the entraining body are composed of plastics material, and in particular polyurethane, and are integrally moulded on the upper side of the planar carrier (12).

10. Conveyor belt according to one of claims 1 to 9, **characterised in that** the planar carrier (12) is formed by a woven or knitted cloth in belt form.

11. Conveyor belt according to one of claims 1 to 10, **characterised in that** the planar carrier (12) is formed by a net in belt form.

12. Conveyor belt according to one of claims 1 to 11, **characterised in that** the planar carrier (12) is composed of plastics material or rubber or is coated with plastics material or rubber.

## Revendications

1. Bande transporteuse constituée d'au moins deux courroies, chaînes ou moyens de support (2, 3) sans fin similaires, entraînés en rotation parallèlement l'un à l'autre et à distance l'un de l'autre et reliés l'un à l'autre par des barres transversales (11) réparties sur la longueur des moyens de support (2, 3), une surface de support (12) en forme de bande sans fin entraînée conjointement en rotation et dont la largeur correspond essentiellement à la distance entre les moyens de support (2, 3) étant prévue entre les moyens de support (2, 3) et étant dotée sur son côté inférieur de lattes d'entraînement (13, 14) orientées transversalement et associées chacune à un barreau transversal (11) respectif, lesquelles lattes d'entraînement délimitent un canal de réception (15) continu sur leur longueur et prévu chacun pour un barreau transversal (11), **caractérisée en ce que** des pièces de délimitation latérale (30, 31; 32, 33) configurées en forme de plaque ou en forme de doigt sont coulées sur au moins un bord longitudinal de la surface du support (12), les pièces (30, 31) de délimitation latérale étant orientées sensiblement à angle droit par rapport au plan de la surface de support (12) en libérant le côté supérieur des moyens de support (2, 3), ou **en ce que** les pièces (32,33) de délimitation latérale sont inclinées vers l'extérieur et chevauchent les moyens de support (2, 3).

2. - Bande transporteuse selon la revendication 1, **caractérisée en ce qu'**une bande de bordure longitudinale (34) formée d'un seul tenant avec les pièces (30, 31; 32, 33) de délimitation latérale est moulée le long d'au moins un bord longitudinal de la surface de support (12).

3. Bande transporteuse selon l'une des revendications 1 ou 2, **caractérisée en ce que** les pièces latérales (30, 31, 32, 33) présentent des appendices de liaison qui débordent vers l'extérieur au-delà des moyens de support (2, 3) et sont reliées et en particulier rivetées au moyen de support (2, 3) voisin dans la zone des appendices de liaison.

4. Bande transporteuse selon l'une des revendications 1 à 3, **caractérisée en ce que** la surface de support (12) présente sur ses bords longitudinaux tournés vers les moyens de support (2, 3) des appendices de liaison (35) qui débordent vers l'extérieur au-delà des moyens de support (2, 3) et est reliée et en particulier rivetée au moyen de support voisin dans la zone de ces appendices.

5. Bande transporteuse selon la revendication 3, **caractérisée en ce que** la surface de support (12) est dotée entre les appendices de liaison (35) de découpes (36) en retrait vers l'intérieur qui forment entre elles des zones de délimitation latérale en formant des moulures dans la surface de support (12).

6. Bande transporteuse selon l'une des revendications 1 à 5, **caractérisée en ce que** les lattes d'entraînement (13; 14) présentent sur leurs deux côtés une nervure d'appendice (19, 20) tournée dans la direction du transport ou dans la direction opposée à la direction de transport pour augmenter la surface de liaison avec le côté intérieur de la surface de support (12) et **en ce que** les nervures d'appendice (19, 20) sont placées en dessous d'un plan horizontal central (21) qui passe par les lattes d'entraînement (13; 14) et sont légèrement inclinées vers le bas.

7. Bande transporteuse selon l'une des revendications 1 à 6, **caractérisée en ce qu'**une latte (22) de protection contre l'usure est appliquée au-dessus des lattes d'entraînement (13; 14) sur le côté supérieur de la surface de support (12).

8. Bande transporteuse selon l'une des revendications 1 à 7, **caractérisée en ce qu'**un corps d'entraînement, en particulier configuré comme corps creux, est appliqué au-dessus des lattes d'entraînement (13; 14) sur le côté supérieur de la surface de support (12).

9. Bande transporteuse selon l'une des revendications 7 ou 8, **caractérisée en ce que** la latte de protection contre l'usure et/ou le corps d'entraînement sont réalisés en matière synthétique et en particulier en polyuréthane et sont coulés sur le côté supérieur de la surface de support (12).

10. Bande transporteuse selon l'une des revendications 1 à 9, **caractérisée en ce que** la surface de support (12) est formée par une toile tissée ou tricotée en forme de bande.

11. Bande transporteuse selon l'une des revendications 1 à 10, **caractérisée en ce que** la surface de support (12) est formée par un treillis en forme de bande.

12. Bande transporteuse selon l'une des revendications 1 à 11, **caractérisée en ce que** la surface de support (12) est constituée de matière synthétique ou de caoutchouc ou est revêtue de matière synthétique ou de caoutchouc.
